# FASCICULE DE BREVET EUROPEEN

(11) **EP 2 174 458 B1**
(45) Date de publication et mention de la délivrance du brevet: **28.03.2018**
(21) Numéro de dépôt: 08826521.0
(22) Date de dépôt: 11.07.2008
(51) Int. Cl.: H04L 29/02, H04L 12/24

(54) **PROCÉDÉ ET SYSTÈME POUR LA DÉCOUVERTE DE LA TOPOLOGIE DES COMMUNICATIONS ENTRE APPLICATIONS D'UN RÉSEAU INFORMATIQUE**
VERFAHREN UND SYSTEM ZUR ERKENNUNG DES LAYOUTS VON KOMMUNIKATIONEN ZWISCHEN ANWENDUNGEN IN EINEM INFORMATIONSNETZWERK
METHOD AND SYSTEM FOR DISCOVERING THE LAYOUT OF COMMUNICATIONS BETWEEN APPLICATIONS IN AN INFORMATION NETWORK

(30) Priorité: 13.07.2007 FR 0756500
(43) Date de publication de la demande: 14.04.2010
(73) Titulaire: InfoVista SAS, 91300 Massy (FR)
(72) Inventeur: DONIN DE ROSIÈRE, Emmanuel, F-78370 PLAISIR (FR)
(74) Mandataire: Pontet Allano & Associes
(86) Numéro de dépôt international: PCT/FR2008/051324
(87) Numéro de publication internationale: WO 2009/013428

(56) Documents cités:
- US-A1- 2006 212 569

## Description

La présente invention se rapporte à un procédé et un système de découverte de la topologie des communications entre applications d'un réseau informatique.

Les mécanismes classiques de découverte de topologie d'un réseau permettent habituellement d'obtenir la topologie d'un point de vue niveau 1 d'après la classification OSI, c'est-à-dire la topologie physique du réseau : les différents éléments constituant le réseau ainsi que la façon dont ils sont reliés entre eux par des câbles par exemple. D'autres mécanismes permettent également d'obtenir la topologie du point de vue de la couche 2 du modèle OSI, c'est-à-dire de définir avec quels équipements un élément donné est capable de communiquer directement. Il existe également d'autres mécanismes permettant de découvrir la topologie de la couche 3 du modèle OSI d'un réseau, c'est-à-dire les différents sous-réseaux existants ainsi que la manière dont ils sont interconnectés.

La présente invention s'intéresse, elle, à la découverte de la topologie de niveau 7 du modèle OSI d'un réseau, c'est-à-dire de la topologie des communications entre les applications exécutées sur les équipements du réseau.

Les procédés classiques de découverte de la topologie des communications entre applications utilisent une sonde passive à l'intérieur du réseau, c'est-à-dire que celle-ci n'effectue aucune interaction avec le réseau. Elle ne fait que capturer les différentes communications effectuées à l'intérieur du réseau et essaye en analysant ces communications, de découvrir la liste des applications sur le réseau ainsi que des liens entre elles. Néanmoins, ce procédé possède de nombreux inconvénients. En effet, la sonde doit être disposée à un point du réseau par lequel toutes les communications transitent afin de pouvoir faire la topologie de tout le réseau. Si un point de ce genre n'existe pas, il devient donc nécessaire de disposer de plusieurs sondes devant collaborer afin de pouvoir entièrement caractériser le réseau. De plus, la ou les sondes n'ont connaissance que des communications entre les applications, elles ne sont donc pas capables de retrouver certaines informations qui ne transitent pas sur le réseau comme par exemple le nom de l'application, le temps d'exécution, la mémoire utilisée... De la même façon, à cause du manque d'informations, la ou les sondes ne sont pas capables de distinguer deux applications identiques situés sur le même équipement du réseau.

La présente invention a pour but de remédier aux inconvénients précités en proposant un nouveau procédé pour découvrir la topologie des communications des applications sur un réseau.

La présente invention a pour but un procédé permettant de déterminer de façon exhaustive la topologie des communications d'un réseau.

Un autre but de l'invention est de déterminer cette topologie de façon rapide.

Avec le procédé selon l'invention, on scrute chaque équipement du réseau. On répertorie l'ensemble des applications et on établit le lien qu'il peut y avoir entre deux applications données. On réalise une topologie complète du réseau. Cette topologie peut être réalisée de façon rapide puisqu'on rapatrie l'ensemble des informations récoltées au sein d'un serveur de traitement. Cette topologie peut être sauvegardée sous forme d'un fichier XML que l'on stocke dans une base de données. On peut aussi utiliser toute autre méthode de stockage permanente ou non.

La présente invention est décrite dans les revendications 1-12.

L'état de la technique le plus proche est décrit dans le document US-2006/212569. Ce document décrit un système et méthode pour représenter la topologie d'applications d'un réseau.

D'autres avantages et caractéristiques de l'invention apparaîtront à l'examen de la description détaillée d'un mode de mise en oeuvre nullement limitatif, et des dessins annexés, sur lesquels :
La figure 1 est une vue générale d'un réseau mettant en oeuvre le procédé selon la présent invention,
La figure 2 est un tableau illustrant des données brutes obtenues après scrutation des applications des équipements du réseau, et
La figure 3 est un tableau illustrant des données de connexion obtenues après scrutation des connexions relatives à l'équipement B.

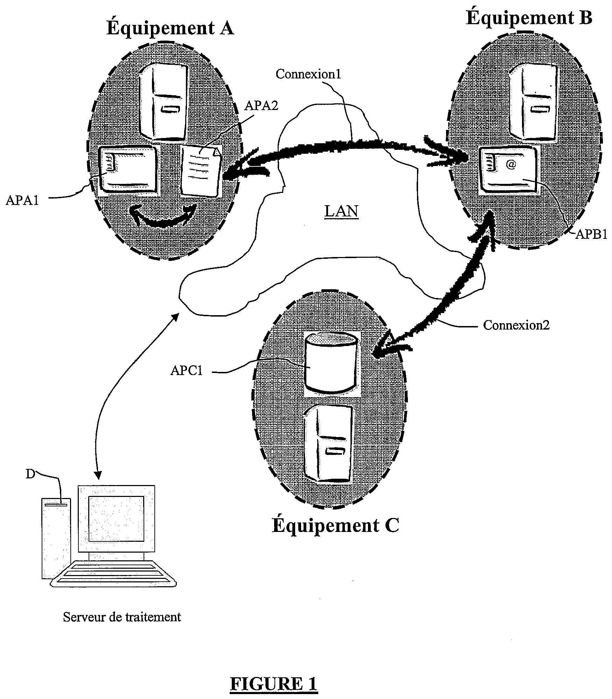

Sur la figure 1 on voit un réseau local LAN comprenant trois équipements A, B et C, ainsi qu'un serveur de traitement D selon l'invention. Ce serveur de traitement est doté de moyens matériels et logiciels conventionnels permettant son bon fonctionnement dans un réseau de communication. Il intègre également une application selon l'invention lui permettant de se connecter à chaque équipement du réseau afin d'effectuer des opérations d'analyse et d'acquisition de données. Chaque équipement comporte une application permettant au serveur de traitement d'acquérir des données au travers d'un protocole d'administration.

L'équipement est une machine comportant notamment deux application APA1 et APA2. Ces applications peuvent communiquer entre elles et aussi communiquer avec d'autres applications contenues dans d'autres équipements du réseau. L'équipement B comporte l'application APB1. L'équipement C comporte l'application APC1.

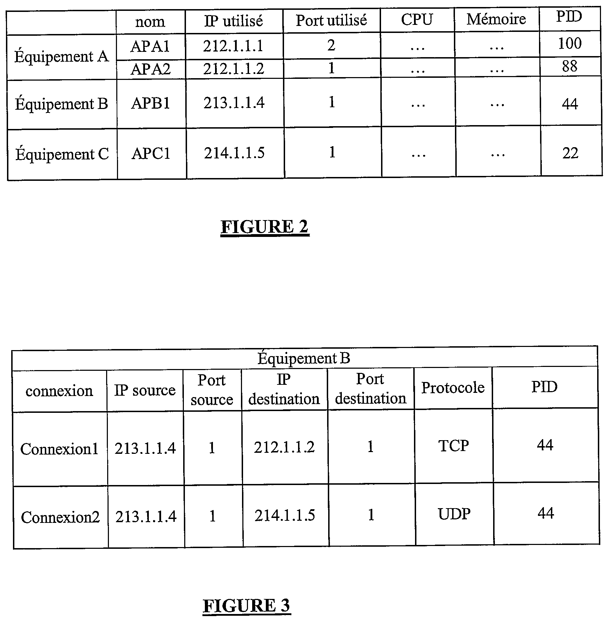

On se propose d'établir la topologie du réseau LAN, c'est-à-dire les liens de communication de niveau 7 dans le modèle OSI. Pour ce faire, le serveur de traitement scrute chaque équipement pour récupérer des données brutes. Ces données sont répertoriées dans le tableau de la figure 2.

Ainsi, pour chaque équipement on acquière le nom de chaque application hébergée par cet équipement, l'adresse IP utilisé, le port utilisé ainsi que des données sur la consommation mémoire, la consommation CPU de l'application considérée et le PID de l'application considérée.

Par exemple, sur l'équipement A, on distingue l'application nommée APA1 qui utilise l'adresse IP 212.1.1.1 sur le port 2, ainsi que l'application nommée APA2 qui utilise l'adresse IP 212.1.1.2 sur le port 1.

Sur l'équipement B, on distingue l'application nommée APB1 qui utilise l'adresse IP 213.1.1.4 sur le port 1.

Sur l'équipement C, on distingue l'application nommée APC1 qui utilise l'adresse IP 214.1.1.5 sur le port 1.

Ensuite, à un instant donné ou de façon répétitive, on récupère des données de connexion pour chaque équipement. Sur la figure 3 on distingue les données de connexion obtenues sur l'équipement B à un instant où les connexions connexion1 et connexion2 étaient en cours c'est-à-dire actives.

Connexion1 est caractérisée par une adresse IP source de 213.1.1.4, un port source de 1, une adresse IP destinataire de 212.1.1.2, un port destinataire égal à 1, un protocole TCP et un numéro de processus PID valant 44.

De la même manière, connexion2 est affectée d'une adresse IP source égale à 213.1.1.4, un port source égal à 1, une adresse IP destinataire égale à 214.1.1.5, un port destinataire égale à 1, un protocole UDP et un numéro de processus PID égal à 44.

Avec l'ensemble de données récupérées, le serveur de traitement D effectue une première phase de calcul consistant, pour chaque équipement, à faire le lien entre les applications et les connexions découvertes sur ce même équipement. Pour cela, on compare les couples IP/Port source utilisés par l'application. Le serveur de traitement est alors capable d'attribuer à une application toutes les communications ayant comme source un couple IP/Port utilisé par cette application. Avantageusement, lorsqu'on possède le numéro du processus PID de chaque communication, le serveur de traitement fait le lien entre l'application et les communications associées. Sur le tableau de la figure 3, chaque communication est associé au PID 44 et donc à l'application APB1.

Lors de la seconde phase de calcul, le serveur de traitement fait le lien entre les IP/Port destination des communications et les applications découvertes sur tous les équipements. De la même façon que précédemment, on utilise les données sur les IP/Port découverts lors de l'acquisition des données brutes des applications.

Grâce à ces deux étapes, on fait le lien entre deux applications données d'un même réseau même si ces applications ne se situent pas sur le même équipement.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour découvrir la topologie des communications entre applications d'un réseau informatique comprenant plusieurs équipements, ce procédé comprenant les étapes suivantes :
a) connexion à chacun des équipements du réseau, en utilisant au moins un protocole d'administration,
b) pour chaque équipement, acquisition de données brutes relatives à des applications hébergées dans cet équipement, ces données brutes comprenant en outre des données de performances de chaque application,
c) pour chaque équipement, acquisition de données de connexion pour chaque connexion en cours établie par une application,
d) à partir des données brutes et des données de connexion ainsi obtenues, on détermine des liens de communication entre respectivement des couples d'applications dudit réseau, et
e) on génère une topologie niveau 7 dudit réseau à partir desdits liens de communication.

2. Procédé selon la revendication 1, **caractérisé en ce que** pour déterminer lesdits liens de communication, on réalise une première phase de calcul au cours de laquelle, pour chaque équipement, à chaque connexion on associe l'application correspondante qui a initiée cette connexion ; et on réalise une seconde phase de calcul au cours de laquelle, pour chaque équipement, à chaque connexion on associe l'application correspondante qui a été le destinataire de cette connexion.

3. Procédé selon la revendication 1 ou 2, **caractérisé en ce que** les données brutes comprennent :
- le nom de chaque application,
- l'adresse IP utilisé par cette application, et
- le port utilisé par cette application,

4. Procédé selon l'une quelconque des revendications précédentes, **caractérisé en ce que** les données de connexion comprennent :
- le protocole utilisé pour chaque connexion établie,
- l'adresse IP source,
- le port source,
- l'adresse IP destinataire, et
- le port destinataire.

5. Procédé selon les revendications 2 à 4, **caractérisé en ce que** l'association entre une connexion et l'application correspondante dans la première phase de calcul comprend une étape de comparaison entre d'une part l'adresse IP source et le port source, et d'autre part l'adresse IP utilisé et le port utilisé.

6. Procédé selon les revendications 2 à 4, **caractérisé en ce que** l'association entre une connexion et l'application correspondante dans la seconde phase de calcul comprend une étape de comparaison entre d'une part l'adresse IP destinataire et le port destinataire, et d'autre part l'adresse IP utilisé et le port utilisé.

7. Procédé selon l'une quelconque des revendications précédentes, **caractérisé en ce que** les données de connexion comprennent en outre le numéro de processus PID utilisé pour chaque communication lors d'une connexion.

8. Procédé selon l'une quelconque des revendications précédentes, **caractérisé en ce qu'**on effectue les étapes a) à e) de façon régulières.

9. Procédé selon l'une quelconque des revendications précédentes, **caractérisé en ce qu'**on effectue les étapes a) à e) de façon planifiées.

10. Procédé selon l'une quelconque des revendications précédentes, **caractérisé en ce qu'**on effectue les étapes a) à e) en réponse à une consigne prédéterminée.

11. Procédé selon l'une quelconque des revendications précédentes, **caractérisé en ce qu'**on stocke la topologie dans une base de données.

12. Serveur pour la mise oeuvre d'un procédé selon l'une quelconque des revendications précédentes, ce serveur étant destiné à découvrir la topologie des communications entre applications d'un réseau informatique comprenant plusieurs équipements, ce serveur comprenant des moyens pour :
a) se connecter à chacun des équipements du réseau, en utilisant au moins un protocole d'administration,
b) pour chaque équipement, acquérir des données brutes relatives à des applications hébergées dans cet équipement,
c) pour chaque équipement, acquérir des données de connexion pour chaque connexion en cours établie par des applications, ces données brutes comprenant en outre des données de performances de chaque application,
d) à partir des données brutes et des données de connexion ainsi obtenues, déterminer des liens de communication entre respectivement des couples d'applications dudit réseau, et
e) générer une topologie niveau 7 dudit réseau à partir desdits liens de communication.

## Patentansprüche

1. Verfahren zum Erkennen der Topologie von Kommunikationen zwischen Anwendungen eines Informationsnetzwerks mit mehreren Geräten, wobei das Verfahren die nachfolgenden Schritte umfasst:
a) Verbinden mit jedem der Geräte unter Verwendung von zumindest einem Administrationsprotokoll,
b) Erfassen von Rohdaten für jedes Gerät, die sich auf gehostete Anwendungen in diesem Gerät beziehen, wobei diese Rohdaten ferner Leistungsdaten einer jeden Anwendung enthalten,
c) Erfassen von Verbindungsdaten für jedes Gerät bei jeder über eine Anwendung erstellten, laufenden Verbindung,
d) ausgehend von den so erhaltenen Rohdaten und Verbindungsdaten Ermitteln von Kommunikationslinks zwischen jeweiligen Anwendungspaaren des Netzwerks, und
e) Erzeugen einer Topologie der Ebene 7 des Netzwerks ausgehend von den Kommunikationslinks.

2. Verfahren nach Anspruch 1, **dadurch gekennzeichnet, dass** zum Ermitteln der Kommunikationslinks eine erste Rechenphase erfolgt, während der für jedes Gerät bei jeder Verbindung die entsprechende Anwendung zugeordnet wird, durch welche diese Verbindung ausgelöst worden ist; und eine zweite Rechenphase erfolgt, während der für jedes Gerät bei jeder Verbindung die entsprechende Anwendung zugeordnet wird, die Empfänger dieser Verbindung gewesen ist.

3. Verfahren nach Anspruch 1 oder 2, **dadurch gekennzeichnet, dass** die Rohdaten enthalten:
- die Bezeichnung jeder Anwendung,
- die von dieser Anwendung verwendete IP-Adresse, und
- den von dieser Anwendung verwendeten Port.

4. Verfahren nach einem der vorangehenden Ansprüche, **dadurch gekennzeichnet, dass** die Verbindungsdaten enthalten:
- das für jede erstellte Verbindung verwendete Protokoll,
- die Quell-IP-Adresse,
- den Quellport,
- die Empfänger-IP-Adresse und
- den Empfängerport.

5. Verfahren nach einem der Ansprüche 2 bis 4, **dadurch gekennzeichnet, dass** die Zuordnung zwischen einer Verbindung und der entsprechenden Anwendung in der ersten Rechenphase einen Schritt des Vergleichens zwischen der Quell-IP-Adresse und dem Quellport einerseits und der verwendeten IP-Adresse und dem verwendeten Port andererseits umfasst.

6. Verfahren nach den Ansprüchen 2 bis 4, **dadurch gekennzeichnet, dass** die Zuordnung zwischen einer Verbindung und der entsprechenden Anwendung in der zweiten Rechenphase einen Schritt des Vergleichens zwischen der Empfänger-IP-Adresse und dem Empfängerport einerseits und der verwendeten IP-Adresse und dem verwendeten Port andererseits umfasst.

7. Verfahren nach einem der vorangehenden Ansprüche, **dadurch gekennzeichnet, dass** die Verbindungsdaten ferner die Prozessnummer PID enthalten, die für jede Kommunikation bei einer Verbindung verwendet wird.

8. Verfahren nach einem der vorangehenden Ansprüche, **dadurch gekennzeichnet, dass** die Schritte a) bis e) regelmäßig erfolgen.

9. Verfahren nach einem der vorangehenden Ansprüche, **dadurch gekennzeichnet, dass** die Schritte a) bis e) geplant erfolgen.

10. Verfahren nach einem der vorangehenden Ansprüche, **dadurch gekennzeichnet, dass** die Schritte a) bis e) in Reaktion auf eine vorbestimmte Vorgabe erfolgen.

11. Verfahren nach einem der vorangehenden Ansprüche, **dadurch gekennzeichnet, dass** die Topologie in einer Datenbank abgelegt wird.

12. Server zum Durchführen eines Verfahrens nach einem der vorangehenden Ansprüche, wobei dieser Server dazu bestimmt ist, die Topologie von Kommunikationen zwischen Anwendungen eines Informationsnetzwerks mit mehreren Geräten zu erkennen, wobei dieser Server Mittel enthält zum:
a) Verbinden mit jedem der Geräte des Netzwerk unter Verwendung von zumindest einem Administrationsprotokoll,
b) Erfassen von Rohdaten für jedes Gerät, die sich auf gehostete Anwendungen in diesem Gerät beziehen,
c) Erfassen von Verbindungsdaten für jedes Gerät bei jeder über Anwendungen erstellten, laufenden Verbindung, wobei diese Rohdaten ferner Leistungsdaten einer jeden Anwendung enthalten,
d) ausgehend von den so erhaltenen Rohdaten und Verbindungsdaten Ermitteln von Kommunikationslinks zwischen jeweiligen Anwendungspaaren des Netzwerks, und
e) Erzeugen einer Topologie der Ebene 7 des Netzwerks ausgehend von den Kommunikationslinks.

## Claims

1. Method for discovering the topology of the communications between applications of a computer network comprising several items of equipment, this method comprising the following steps:
a) connecting to each of the items of equipment of the network, by using at least an administration protocol,
b) for each item of equipment, acquiring raw data relating to applications hosted within this item of equipment, those raw data moreover comprising performance data of each application,
c) for each item of equipment, acquiring connection data for each live connection established by an application,
d) from the raw data and the connection data thus obtained, communication links are determined respectively between pairs of applications of said network, and
e) a level-7 topology of said network is generated from said communication links.

2. Method according to claim 1, **characterized in that** in order to determine said communication links, a first calculation phase is carried out, during which, for each item of equipment, the corresponding application which initiated a connection is associated with said connection; and a second calculation phase is carried out during which, for each item of equipment, the corresponding application which was the recipient of this connexion is associated with each connection.

3. Method according to claim 1 or 2, **characterized in that** the raw data comprise:
- the name of each application,
- the IP address used by this application, and
- the port used by this application,

4. Method according to any one of the preceding claims, **characterized in that** the connection data comprise:
- the protocol used for each connection established,
- the source IP address,
- the source port,
- the recipient IP address, and
- the destination port.

5. Method according to claims 2 to 4, **characterized in that** the association between a connection and the corresponding application in the first calculation phase comprises a step of comparison between on the one hand, the source IP address and the source port, and on the other hand the IP address used and the port used.

6. Method according to claims 2 to 4, **characterized in that** the association between a connection and the corresponding application in the second calculation phase comprises a step of comparison between on the one hand, the recipient IP address and the recipient port, and on the other hand, the IP address used and the port used.

7. Method according to any one of the previous claims, **characterized in that** the connection data include moreover the PID process number used for each communication during a connection.

8. Method according to any one of the previous claims, **characterized in that** the steps a) to e) are carried out in a regular fashion.

9. Method according to any one of the previous claims, **characterized in that** the steps a) to e) are carried out in a planned fashion.

10. Method according to any one of the previous claims, **characterized in that** the steps a) to e) are carried out in response to a predetermined instruction.

11. Method according to any one of the previous claims, **characterized in that** the topology in stored in a database.

12. Server for discovering the topology of the communications between applications of a computer network comprising several items of equipment, this server comprising means for:
a) connecting to each of the items of equipment of the network,
b) for each item of equipment, acquiring raw data relating to applications hosted in this item of equipment,
c) for each item of equipment, acquiring connection data for each live connection established by applications,
d) based on the raw data and the connection data thus obtained, determining communication links respectively between pairs of applications of said network, and
e) generating a level-7 topology of said network from said communication links.
